# EUROPEAN PATENT SPECIFICATION

(11) **EP 2 509 829 B1**
(45) Date of publication and mention of the grant of the patent: **03.12.2014**
(21) Application number: 10836172.6
(22) Date of filing: 03.12.2010
(51) Int. Cl.: H01H 9/00, B60R 21/215

(54) **REMOTE CONTROL ASSEMBLY INSTALLED IN AIRBAG MODULE**
IN EINEM AIRBAGMODUL INSTALLIERTE FERNSTEUERUNGSANORDNUNG
ENSEMBLE TÉLÉCOMMANDE INSTALLÉ DANS UN MODULE DE COUSSIN DE SÉCURITÉ GONFLABLE

(30) Priority: 09.12.2009 KR 20090121735
(43) Date of publication of application: 17.10.2012
(73) Proprietor: Autoliv Development AB, 447 83 Vårgårda (SE)
(72) Inventor: HAM, Yeon Jin, Wonju-si Gangwon-do 220-803 (KR); KIM, Tae Hoon, Wonju-si Gangwon-do 220-729 (KR); KIM, Tae Soo, Chuncheon-si Gangwon-do 200-947 (KR)
(74) Representative: Müller, Karl-Ernst
(86) International application number: PCT/KR2010/008619
(87) International publication number: WO 2011/071276

(56) References cited:
- EP-A1- 1 164 054
- DE-A1- 10 250 457
- DE-U1-202004 012 964
- JP-A- 2001 354 101
- KR-A- 20090 090 007
- US-A- 5 085 461
- US-A1- 2005 274 591
- US-A1- 2010 207 362

## Description

### Technical Field

The present invention relates to a remote control assembly installed in an airbag module for a vehicle. More particularly, the present invention relates to a remote control switch installed in an airbag module, capable of solving the problem occurring in an integral-type remote control switch, which may not be independently exchanged upon the failure thereof, wherein a detachable block adapter is provided to allow the remote control switch installed in the airbag module to be simply exchanged with new one by separating the detachable block adapter from a fixing plate such that a worker can replace only the remote control switch by picking up the remote control switch upon the failure of the remote control switch.

In addition, the present invention relates to a remote control assembly having a block adapter including an upper block and a lower block, in which a thickness of the block adapter can be elastically adjusted by an elastic member interposed between the upper and lower blocks, so that a remote control switch can be instantly exchanged with new one by releasing a fastening bolt upon the failure of the remote control switch.

### Background Art

As generally known in the art, a vehicle is regarded as a transportation means as well as a living necessary in modem society. As the living time in the vehicle has been increased, various accessory devices are installed in the vehicle for the purpose of convenience of users. Recently, various luxurious accessory devices, such as an audio device, a remote control key, a remote control ignition device, a rear-side collision sensor, an A/V system, and a navigation system, have been provided for the vehicle.

In order to ensure the safety of occupants upon the vehicle collision, according to the related art, a seat belt is employed and the collision analysis is performed to improve the design of the vehicle structure. Recently, an airbag device is provided together with the seat belt to restrain the movement of the occupants and to attenuate the impact upon the vehicle collision, thereby protecting the occupants more safely.

The rate of vehicles equipped with airbag devices is very high in North America and Europe, and this rate is gradually increased in Korea. In the development of the airbag system, it is very important to timely deploy the airbag by detecting the vehicle collision. To this end, an airbag module is installed in the airbag system. The airbag module includes a remote control switch, which is independently operated.

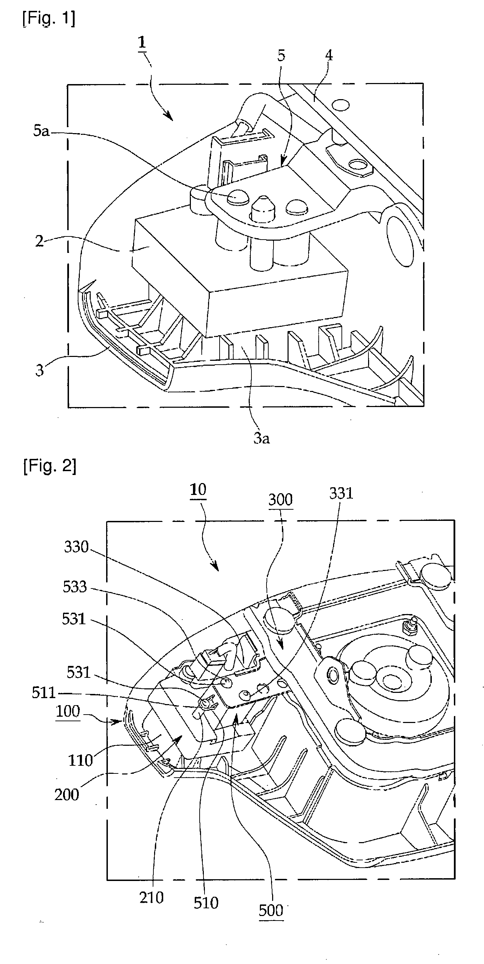

FIG. 1 is a perspective view showing a remote control assembly 1, that is, an airbag remote control module installed in an airbag module according to the related art. Referring to FIG. 1, the remote control assembly 1 according to the related art includes an integral-type remote control switch 2 accommodated in a remote control switch mounting part 3a of an airbag module cover 3. The integral-type remote control switch 2 is fixedly restrained in the remote control switch mounting part 3a such that the integral-type remote control switch 2 may not move in the front, rear, left and right directions.

Then, the integral-type remote control switch 2 is firmly fixed to a remote control switch fixing part 5, which is integrally formed with a fixing plate 4, by a fastening bolt 5a.

In order to exchange the integral-type remote control switch 2 with new one upon the failure or breakage of the integral-type remote control switch 2, a worker must pick up the integral-type remote control switch 2 by entirety disassembling the fixing plate 4. However, in this case, internal components of the remote control assembly 1 may be disjointed, so that the exchange work for the integral-type remote control switch 2 may not be easily achieved. This is because the integral-type remote control switch 2 may not be independently picked up in the upward direction.

According to the remote control assembly 1 of the related art, when the integral-type remote control switch 2 is damaged, the integral-type remote control switch 2 may not be independently separated from the airbag module, so that the airbag module must be exchanged. In detail, according to the remote control assembly 1 installed in the airbag module of the related art, the remote control switch 2 is integrally formed so that the remote control assembly 1 must be exchanged even if only the remote control switch 2 is damaged or broken, thereby causing inefficiency in terms of economy and labor force.

In addition, the remote control assembly 1 is very expensive, so the remote control assembly 1 may not be extensively used. In addition, the remote control switch 2 of the remote control assembly 1 is equipped with an electronic circuit, so the remote control switch 2 may be frequently damaged or broken under the external environment as compared with other components. Therefore, it is very inefficient in terms of economy if the remote control assembly 1 must be exchanged when the remote control switch 2 is damaged or broken.

That is, since the remote control switch 2 is a component of the remote control assembly 1, the cost of the remote control switch 2 is inexpensive than the cost of the remote control assembly 1, so it is very inefficient if the remote control assembly 1 is exchanged when the remote control switch 2 is damaged or broken.

A remote control assembly according to the related art is disclosed in US 5,085,461, for example.

### Disclosure of Invention

### Technical Problem

The present invention has been made to solve the problems occurring in the related art, and an object of the present invention is to provide a remote control assembly installed in an airbag module, capable of improving the economic efficiency by providing a detachable block adapter to simply exchange only a remote control switch when the remote control switch is damaged or broken.

Another object of the present invention is to provide a remote control assembly installed in an airbag module, in which a block adapter includes an upper block and a lower block such that a thickness of the block adapter can be elastically adjusted by an elastic member interposed between the upper and lower blocks, so that only a remote control switch can be easily exchanged with new one without exchanging the remote control assembly, which is expensive about five to six times as compared with the remote control switch, by picking up the remote control switch upon the failure of the remote control switch.

Still another object of the present invention is to provide a remote control assembly installed in an airbag module, in which a locking jaw and a locking protrusion are provided to prevent an upper block and a lower block of a block adapter from being separated from each other even if a remote control switch can be removed from the remote control assembly by picking up the remote control switch without separately disassembling the block adapter.

### Solution to Problem

In order to accomplish the objects, the present invention provides embodiments having the following structure.

According to the present invention, there is provided a remote control assembly installed in an airbag module for a vehicle. The remote control assembly includes a cover for covering a whole area of the airbag module; a remote control switch installed in the cover, to fixing plate for fixing components installed in the airbag module; and a block adapter installed between the remote control switch and the fixing plate to separate the remote control switch.

According to another embodiment of the present invention, the fixing plate includes an adapter fixing member having a first fixing hole, the block adapter includes a second fixing hole corresponding to the first fixing hole of the adapter fixing member, and the block adapter is detachably fixed to the fixing plate by a fastening bolt. The block adapter includes a remote control switch coupling part having a first coupling hole, the remote control switch includes a second coupling hole corresponding to the first coupling hole of the remote control switch coupling part, and the remote control switch is detachably fixed to the block adapter by a fastening bolt.

According to another embodiment of the present invention, the cover includes a remote control switch mounting part into which the remote control switch is received.

According to the present invention, the block adapter includes: an upper block detachably fixed to the fixing plate; a lower block detachably fixed to the remote control switch; and an elastic member interposed between the upper and lower blocks.

According to another embodiment of the present invention, the upper block is provided at a lower portion thereof with a receiving part for receiving the lower block, and the lower block includes a remote control switch coupling part. A recess is formed at an upper portion of the lower block to receive the elastic member. The lower block is reccived in the upper block, and the elastic member is interposed between the upper and lower blocks to elastically support the upper and lower blocks.

According to another embodiment of the present invention, the second fixing hole is formed in the upper block and the remote control switch coupling part is provided at the lower block. The upper block includes a locking jaw for preventing the upper block from being separated from the lower block, and the lower block includes a locking protrusion for preventing the lower block from being separated from the upper block.

### Advantageous Effects of Invention

As described above, the present invention has the following effects.

According to the present invention, the detachable block adapter is provided to exchange only the remote control switch installed in the airbag module without exchanging the airbag module upon the failure or the remote control switch, so that the economic efficiency can be improved.

In addition, according to the present invention, the block adapter includes the upper block and the lower block such that the thickness of the block adapter can be elastically adjusted by the elastic member interposed between the upper and lower blocks, so that only the remote control switch can be easily exchanged with new one without exchanging the remote control assembly, which is expensive about five to six times as compared with the remote control switch, by picking up the remote control switch upon the failure of the remote control switch.

Further, according to the present invention, since the remote control switch installed in the remote control assembly can be easily exchanged, the remote control switch can be sold in the market as a singular product, so that the market for vehicle components can be activated and the economic efficiency can be improved.

In addition, according to the present invention, the block adapter includes the upper block and the lower block and the thickness of the block adapter can be elastically adjusted, so that the remote control switch can be easily and simply disassembled and exchanged without disassembling the block adapter.

Further, according to the present invention, the upper block and the lower block of the block adapter are elastically compressed against each other, so the remote control switch can be pushed upward by the upper block and the lower block, so that the remote control switch can be easily disassembled. In addition, the locking jaw is formed at the upper block and the locking protrusion is formed at the lower block to prevent the upper block and the lower block from being separated from each other, thereby facilitating the exchange work for the remote control switch.

According to the present invention, the airbag module is assembled by the fastening bolt (screw bolt) and the detachable block adapter is provided between the body of the remote control switch and the fixing plate of the airbag module, so that the simple structure can be achieved at the low cost. In addition, it is easy to exchange or repair individual components of the remote control assembly when the individual components are damaged or broken, so that the convenience of use for the remote control assembly can be improved.

In addition, according to the present invention, the remote control switch can be detachably fixed by providing the block adapter and modifying the structure and shape of the fixing plate for restraining the remote control switch.

### Brief Description of Drawings

FIG. 1 is a perspective view showing an airbag remote control assembly according to the related art;
FIG. 2 is a perspective view showing an airbag remote control assembly according to the present invention;
FIG. 3 is a perspective view showing an airbag remote control switch protruding from the front surface of an airbag remote control assembly;
FIG. 4 is a view showing the structure of an airbag remote control switch according to the present invention;
FIGS. 5 to 8 are perspective views showing the disassembling step for an airbag remote control switch according to the present invention;
FIG. 9 is a perspective view showing a block adapter according to another embodiment of the present invention; and
FIG. 10 is an exploded perspective view showing a block adapter according to still another embodiment of the present invention.

### Mode for the Invention

Hereinafter, a remote control assembly installed in an airbag module according to exemplary embodiments of the present invention will be described in detail with reference to accompanying drawings.

Prior to explaining the detailed description, it should be understood that the terms or words used in the present specification and claims may not be limited to common meanings or dictionary meanings, but interpreted as a meaning or a concept appropriate to the technical scope of the present invention under the principle that the inventor can coin new words to explain the present invention in the best manner.

Accordingly, the embodiments described in the present specification and the structure shown in accompanying drawings are only for illustrating the exemplary embodiments of the present invention within the technical scope of the present invention. Accordingly, the person skilled in the art should comprehend that various equivalents and modifications can be made in place of the embodiments.

Hereinafter, exemplary embodiments and the operation of the remote control assembly installed in the airbag module according to the present invention will be described with reference to accompanying drawings.

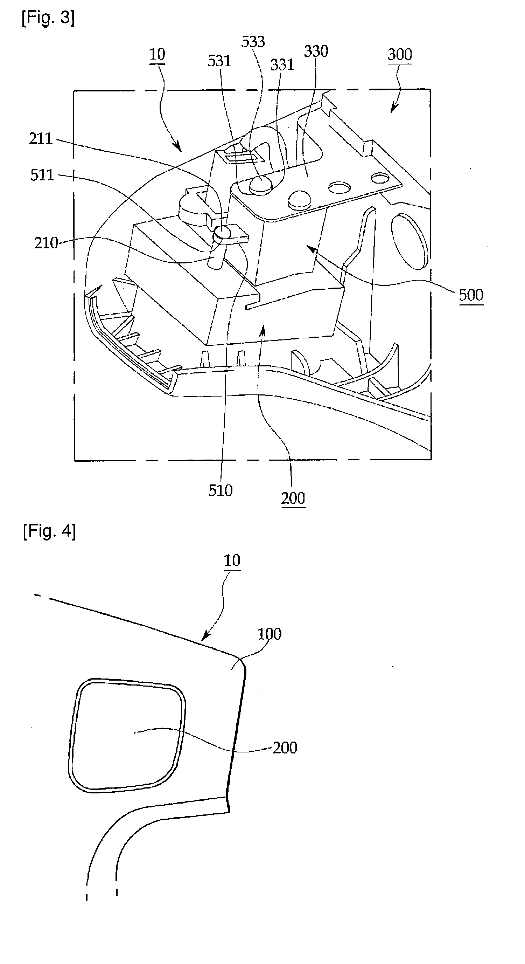

FIG. 2 is a perspective view showing the remote control assembly installed in the airbag module according to the present invention, FIG. 3 is a perspective view showing the remote control switch protruding from the front surface of the remote control assembly, and FIG. 4 is a view showing the structure of the remote control switch according to the present invention.

Referring to FIGS. 2 to 4, the remote control assembly 10 installed in the airbag module for a vehicle according to the present invention includes a cover for covering a whole area of the airbag module; a remote control switch installed in the cover; a fixing plate for fixing components installed in the airbag module; and a block adapter installed between the remote control switch and the fixing plate to separate the remote control switch.

According to the remote control assembly of the related art, a remote control switch is integrally formed with an airbag module so that the airbag module must be exchanged when the remote control switch is broken, thereby causing inefficiency in terms of economy and labor force. However, according to the remote control assembly 10 of the present invention, the remote control switch 200 is manufactured independently from the airbag module, so that it is not necessary to exchange the airbag module upon the failure of the remote control switch 200. In addition, the remote control switch 200 can be sold in the market as a singular product, so that the market for vehicle components can be activated.

The cover 100 forms an external appearance of the remote control assembly 10. In general, the cover 100 is made from a thermosetting plastic having strong strength and light weight, but the present invention is not limited thereto. Various materials can be used for the cover 100 if they can cover and protect the whole area of the remote control assembly 10. The cover 100 includes a remote control switch mounting part 110 into which the remote control switch 200 is inserted.

As shown FIGS. 2 to 4, the remote control switch mounting part 110 of the cover 100 protrude toward an inside of the remote control assembly 10 such that the remote control switch 200 can be inserted into the remote control switch mounting part 110.

As shown in FIG. 4, the remote control switch 200 is assembled with the remote control switch mounting part 110 such that the remote control switch 200 can protrude outward. Once the remote control switch 200 is assembled with the remote control switch mounting part 110, the remote control switch 200 may not move in the front, rear, left and right directions. Thus, the worker must pick up the remote control switch 200 to separate the remote control switch 200 from the remote control switch mounting part 110.

Accordingly, the block adapter 500 according to the present invention may represent the effective function when the remote control switch 200 is exchanged.

As shown in FIGS. 2 to 4, the remote control switch 200 is provided therein with a complex electronic circuit. Thus, the remote control switch 200 is covered with a thermosetting plastic having a light weight to protect the internal electronic circuit of the remote control switch 200.

The lower portion of the remote control switch 200 is inserted into the remote control switch mounting part 110 and the upper portion of the remote control switch 200 is fixedly coupled to the block adapter 500, which is the main component of the present invention. Therefore, the remote control switch 200 has a coupling hole 210 such that the remote control switch 200 can be detachably coupled to the block adapter 500.

The coupling hole 210 allows the remote control switch 200 to be detachably coupled to the block adapter 500 by a fastening bolt 211. Thus, when the remote control switch 200 is exchange due to the failure of the remote control switch 200, the block adapter 500 is primarily separated by releasing the fastening blot 211 from the coupling hole 210 and then the remote control switch 200 is separated by picking up the remote control switch 200 inserted into the remote control switch mounting part 110.

The remote control switch 200 is a main component of the present invention and includes a complex electronic circuit, so the remote control switch 200 is easily damaged or malfunctioned. If the remote control switch 200 is easily damaged or malfunctioned, the remote control switch 200 must be exchanged. According to the present invention, it is possible to exchange only the remote control switch 200 without exchanging the remote control assembly 10, which is expensive about five to six times as compared with the remote control switch 200.

As shown in FIGS. 2 and 3, the fixing plate 300 fixes the internal components of the remote control assembly 10 according to the present invention. That is, the fixing plate 300 allows the internal components of the remote control assembly 10 to interact with each other. The fixing plate 300 can be manufactured by using a rigid plastic plate formed with various holes and protrusions to fix the internal components of the remote control assembly 10. The fixing plate 300 according to the present invention may include an adapter fixing member 330 for detachably fixing the block adapter 500.

As shown in FIG. 3, the adapter fixing member 330 is a plate member and the block adapter 500 is detachably coupled to the lower portion of the adapter fixing member 330. The adapter fixing member 330 is formed with a fixing hole 331 such that the block adapter 500 is detachably coupled to the adapter fixing member 330. That is, the block adapter 500 is fixed to the adapter fixing member 330 by a fastening bolt screw-coupled into the fixing hole 331. In addition, when the remote control switch 200 is exchanged, the fastening bolt is released from the fixing hole 331 to remove the block adapter 500, so that the remote control switch 200 can be easily exchanged.

The block adapter 500 is the main component of the present invention and has functions for accomplishing the technical object and effect of the present invention. In detail, the block adapter 500 is interposed between the remote control switch 200 and the fixing plate 300 to allow the remote control switch 200 to be easily exchanged with new one upon the failure of the remote control switch 200.

As shown in FIGS. 2 and 3, the block adapter 500 can be prepared as a rigid plastic member having a rectangular shape with a predetermined thickness, but the present invention is not limited thereto. Various bocks can be used for the block adapter 500 if they have a predetermined thickness to space the remote control switch 200 from the fixing plate 300.

The block adapter 500 includes a remote control switch coupling part 510 detachably coupled to the remote control switch 200 through the coupling hole 210 of the remote control switch 200. In addition, the block adapter 500 includes a fixing hole 531 corresponding to the fixing hole 331 of the fixing plate 300. The block adapter 500 is detachably coupled to the adapter fixing member 330 through the fixing hole 531.

As shown in FIG. 3, the remote control switch 200 is detachably coupled to the lower portion of the remote control switch coupling part 510. Thus, the remote control switch coupling part 510 has a coupling hole 511 corresponding to the coupling hole 210 of the remote control switch 200 in such a manner that the remote switch coupling part 510 can be detachably coupled to the remote control switch 200 by a fastening bolt 211.

As shown in FIG. 3, the fixing hole 531 is a screw hole formed at an upper portion of the block adapter 500. The fixing hole 531 of the block adapter 500 is sequentially formed with the fixing hole 331 of the fixing plate 330 to allow the block adapter 500 to be securely fixed to the fixing plate 300 by a fastening bolt 533. In addition, the block adapter 500 can be separated from the fixing plate 330 by releasing the fastening bolt 533.

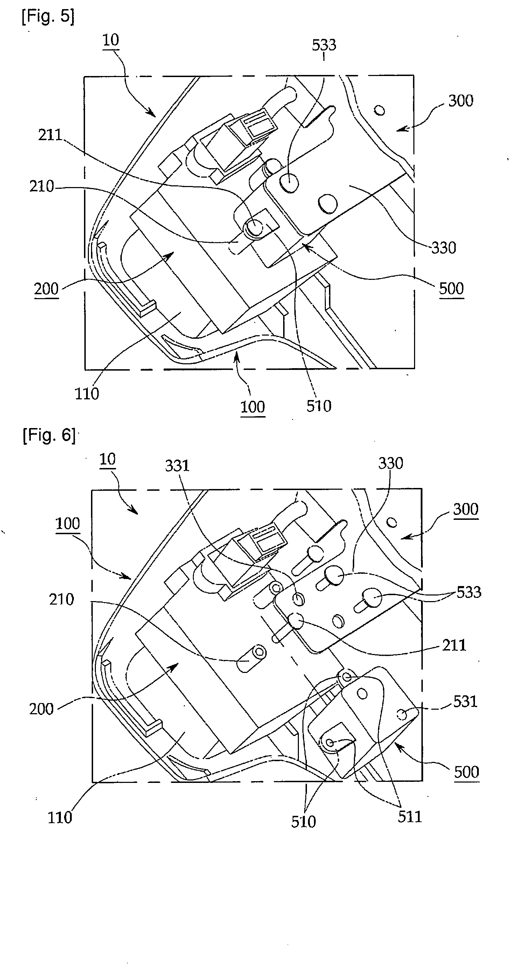

Hereinafter, the assembling and disassembling processes for the remote control switch 200 according to the present invention will be described in detail with reference to accompanying drawings. FIGS. 5 to 8 are perspective views showing the disassembling step for the airbag remote control switch 200 according to the present invention.

FIGS. 5 and 6 show the disassembling step for the airbag remote control switch 200 from the airbag module to exchange the remote control switch 200 upon the failure of the remote control switch 200.

As shown in FIG. 5, when the remote control switch 200 is damaged or broken, the fastening bolt 533 fastened between the block adapter 500 and the fixing plate 300 and the fastening bolt 211 fastened between the block adapter 500 and the remote control switch 200 are released. Since the fastening bolts 533 and 211 are screw bolts, the fastening bolts 533 and 211 can be easily released.

Then, as shown in FIG. 6, the block adapter 500 can be slidably separated in the lateral direction. Thus, a space corresponding to the thickness of the block adapter may be formed between the lower portion of the fixing plate 300 and the upper portion of the remote control switch 200 as the block adapter 500 is removed.

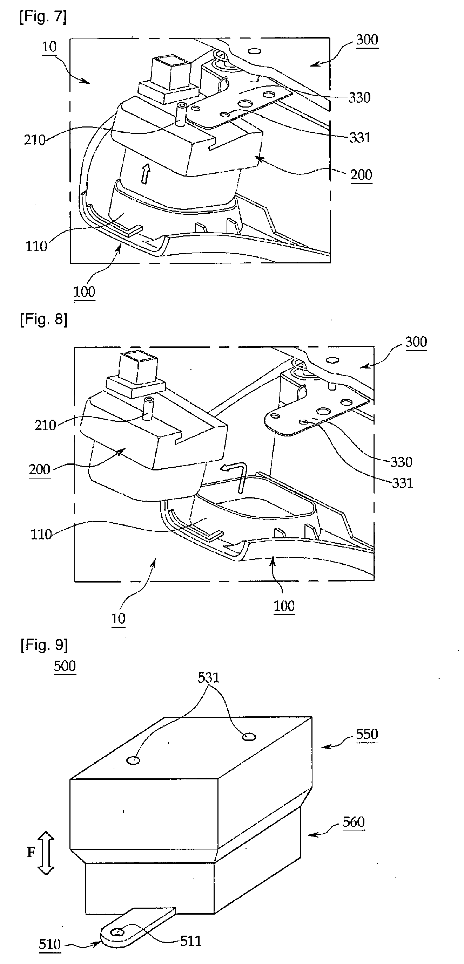

Next, as shown in FIG. 7, the remote control switch 200 is picked up within the space. Thus, the remote control switch 200 can be separated from the remote control switch mounting part 110 of the cover 100.

Thus, as shown in FIG. 8, the remote control switch 200 can be simply removed out of the remote control assembly 10 without exerting bad influence upon the internal components of the remote control assembly 10.

In contrast, when the new remote control switch 200 is assembled with the remote control assembly 100, the new remote control switch 200 is inserted into the remote control switch mounting part 110 of the cover 100. Then, the block adapter 500 is fixed to the fixing plate 300 and the remote control switch 200 by using the fasting bolts 533 and 211, thereby providing the remote control assembly 10 installed in the airbag module.

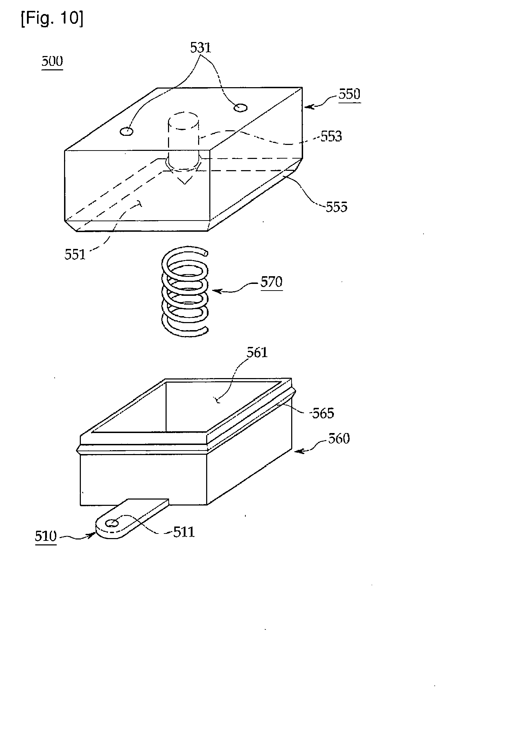

Hereinafter, another embodiments of the present invention will be described with reference FIGS. 9 and 10. FIG. 9 is a perspective view showing a block adapter according to another embodiment of the present invention, and FIG. 10 is an exploded perspective view showing a block adapter according to still another embodiment of the present invention.

According to another embodiment of the present invention, the block adapter 500 includes an upper block 550 detachably fixed to the fixing plate 300, a lower block 560 detachably fixed to the remote control switch 200, and an elastic member 570 interposed between the upper and lower blocks 550 and 560.

According to the previous embodiment of the present invention, the remote control switch 200 can be disassembled after the block adapter 500 has been disassembled. However, according to another embodiment of the present invention, the remote control switch 200 can be disassembled without disassembling the block adapter 500.

Hereinafter, the operation of another embodiment of the present invention will be described. As shown in FIG. 9, when the remote control switch 200 is damaged or broken, the remote control assembly 200 is disassembled from the block adapter 500. Then, since the upper and lower blocks can be elastically adjusted in the longitudinal direction F, the thickness of the block adapter 500 can be reduced by compressing the upper and lower blocks against each other.

Therefore, the remote control switch 200 can be slidably disassembled from the block adapter 500 by compressing the block adapter 500. Thus, the remote control switch 200 can be exchanged without disassembling the block adapter 500, so that the exchange work for the remote control switch 200 can be simplified.

According to another embodiment of the present invention, the fixing hole 531 is formed in the upper block 550 and the remote control switch coupling part 510 is provided at the lower block 560. Since the fixing hole 531 is formed in the upper portion of the upper block 550, the upper block 550 can be fixedly coupled to the adapter fixing member 330 of the fixing plate 300. In addition, the lower block 560 can be fixedly coupled to the remote control switch 200 because the remote control switch coupling part 510 is provided at the lower block 560.

As shown in FIGS. 9 and 10, the bottom surface of the upper block 550 is open to form a receiving section 551 for receiving the lower block 560. In addition, an elastic member fixing part 553 is provided at the lower portion of the upper block 550 and the elastic member 570 is fixedly coupled to the elastic member fixing part 553.

In detail, the upper and lower blocks 550 and 560 must be telescopically assembled with each other to reduce the thickness of the block adapter 500. To this end, the lower block 560 is telescopically received in the upper block 550 while interposing the elastic member 570 therebetween. To the contrary, the upper block 550 can be telescopically received in the lower block 560 while interposing the elastic member 570 therebetween. That is, the upper and lower blocks 550 and 560 may be variously configured if they can reduce the thickness of the block adapter 500 while being compressed against each other by the elastic member 570 and these configurations may be within the scope of the present invention.

Referring to FIG. 10, the receiving section 551 is a cavity formed in the upper block 550 and the lower block is accommodated in the receiving section 551. The elastic member fixing part 553 is a protrusion provided on a top inner surface of the upper block 550 to prevent the elastic member 570 from being separated from the upper block 550. That is, when the elastic member 570 includes an elastic spring, the elastic spring is fixedly fitted around the elastic member fixing part 553.

As shown in FIGS. 9 and 10, the lower block 560 is telescopically accommodated in the upper block 550 to elastically adjust the thickness of the block adapter 500. The top surface of the lower block 560 is open to form a recess 561 for receiving the elastic member 570. That is, the elastic member 570 is accommodated in the recess 561 such that the elastic member 570 may not move in front, rear, left and right directions.

The elastic member 570 is interposed between the upper and lower blocks 550 and 560 and the upper and lower blocks 550 and 560 can be elastically compressed against each other by the elastic member 570, so that the thickness of the block adapter 500 can be reduced.

In general, the elastic member 570 includes an elastic spring having strong elasticity. In addition, various elastic materials can be used for the elastic member 570 if they have sufficient elasticity. For instance, a gas spring or an air spring can be used as the elastic member 570. These various configurations of the elastic member may be within the scope of the present invention.

According to still another embodiment of the present invention, as shown in FIG. 10, the upper block 550 has a locking jaw 555 and the lower block 560 has a locking protrusion 565 in such a manner that the upper and lower blocks 550 and 560 can be prevented from being separated from each other.

As the remote control switch 200 is disassembled from the adapter block 500 by compressing the upper and lower blocks 550 and 560 against each other, the lower block 560 may be separated from the upper block 550 because there is no fixing structure for the lower block 560. In this regard, the locking jaw 555 and the locking protrusion 565 are provided in the upper and lower blocks 550 and 560, respectively, to prevent the lower block 560 from being separated from the upper block 550.

As shown in FIG. 10, the locking jaw 555 has a hook shape extending inward of the upper block 550. In addition, the locking protrusion 565 extends outward from the lower block 560 in correspondence with the locking jaw 555. However, the present invention is not limited to such configurations. Various types of the locking jaw 555 and the locking protrusion 560 can be adopted, if they can prevent the lower block 560 from being separated from the upper block 550.

Therefore, according to the present invention, the remote control switch 200 can be independently assembled to and disassembled from the remote control assembly 10 installed in the remote control assembly 10, so that the remote control switch 200 can be sold in the market as a singular product.

Although the exemplary embodiments of the present invention have been described, it is understood that the exemplary embodiments help one ordinary skilled in the art to easily realize the middle side airbag confined between the arm-rest part and the seat according to the present invention, but the present invention should not be limited to these exemplary embodiments and accompanying drawings. Therefore, various changes and modifications can be apparently made by the skilled in the art without departing from the technical scope of the present invention.

## Claims

1. A remote control assembly (10) installed in an airbag module for a vehicle, the assembly comprising:
a cover (100) for covering a whole area of the airbag module;
a remote control switch (200) installed in the cover (100);
a fixing plate (300) for fixing components installed in the airbag module; and
a block adapter (500) installed between the remote control switch (200) and the fixing plate (300) to, separate the remote control switch (200), **characterised in that** the block adapter (500) includes:
an upper block (550) detachably fixed to the fixing plate (300);
a lower block (560) detachably fixed to the remote control switch (200); and
an elastic member (570) interposed between the upper and lower blocks.

2. The remote control assembly (10) of claim 1, wherein the fixing plate (300) includes an adapter fixing member (330) having a first fixing hole (331), the block adapter includes a second fixing hole (531) corresponding to the first fixing hole (331) of the adapter fixing member (330), and the block adapter (500) is detachably fixed to the fixing plate (300) by a fastening bolt (533).

3. The remote control assembly (10) of claim 2, wherein the block adapter (500) includes a remote control switch coupling part (510) having a first coupling hole (511), the remote control switch (200) includes a second coupling hole (210) corresponding to the first coupling hole (511) of the remote control switch coupling part (510), and the remote control switch (200) is detachably fixed to the block adapter (500) by a fastening bolt (211).

4. The remote control assembly (10) of claim 3, wherein the cover (100) includes a remote control switch mounting part (110) into which the remote control switch (200) is received.

5. The remote control assembly (10) of claim 1, wherein the upper block (550) is provided at a lower portion thereof with an elastic member fixing part (553) to prevent the elastic member (570) from being separated by fixing the elastic member (570).

6. The remote control assembly (10) of claim 3 or 4, wherein the second fixing hole (531) is formed in the upper block (550) and the remote control switch coupling part (510) is provided at the lower block (560).

7. The remote control assembly (10) of claim 6, wherein the lower block (560) is received in the upper block (550), the elastic member (570) is interposed between the upper and lower blocks to elastically support the upper and lower blocks, the'upper block (550) includes a locking jaw (555) for preventing the upper block (550) from being separated from the lower block (560), and the lower block (560) includes a locking protrusion (565) for preventing the lower block (560) from being separated from the upper block (550).

## Patentansprüche

1. Fernsteuerungsanordnung (10), installiert in einem Airbagmodul für ein Kraftfahrzeug, wobei die Anordnung umfasst:
eine Abdeckung (100) zum Abdecken eines gesamten Bereichs des Airbagmoduls;
einen Fernsteuerungsschalter (200), der in der Abdeckung (100) installiert ist;
eine Befestigungsplatte (300) zur Befestigung von Komponenten, die in dem Airbagmodul installiert sind; und
einen Adapterblock (500), der zwischen dem Fernsteuerungsschalter (200) und der Befestigungsplatte (300) installiert ist, zur Abtrennung des Fernsteuerungsschalters (200), **dadurch gekennzeichnet, dass** der Adapterblock (500) beinhaltet:
einen oberen Block (550), der abnehmbar an der Befestigungsplatte (300) befestigt ist;
einen unteren Block (560) der abnehmbar an dem Fernsteuerungsschalter (200 befestigt ist; und
ein elastisches Element (570), das zwischen den oberen und den unteren Blöcken angeordnet ist.

2. Fernsteuerungsanordnung (10) nach Anspruch 1, wobei die Befestigungsplatte (300) ein Adapterbefestigungselement (330) beinhaltet, das eine erste Befestigungsöffnung (331) aufweist, der Adapterblock eine zweite Befestigungsöffnung (531) beinhaltet, die mit der ersten Befestigungsöffnung (331) des Adapterbefestigungselements (330) korrespondiert, und wobei der Adapterblock (500) mit einem Befestigungsbolzen (533) abnehmbar an der Befestigungsplatte (300) befestigt ist.

3. Fernsteuerungsanordnung (10) nach Anspruch 2, wobei der Adapterblock (500) ein Fernsteuerungsschalter-Kupplungsteil (510) beinhaltet, das eine erste Kupplungsöffnung (511) aufweist, der Fernsteuerungsschalter (200) eine zweite Kupplungsöffnung (210) beinhaltet, die mit der ersten Kupplungsöffnung (511) des Fernsteuerungsschalter-Kupplungsteils (510) korrespondiert, und wobei der Fernsteuerungsschalter (200) mit einem Befestigungsbolzen (211) abnehmbar an dem Adapterblock (500) befestigt ist.

4. Fernsteuerungsanordnung (10) nach Anspruch 3, wobei die Abdeckung (100) ein Fernsteuerungsschalter-Befestigungsteil (110) beinhaltet, in das der Fernsteuerungsschalter (200) aufgenommen ist.

5. Fernsteuerungsanordnung (10) nach Anspruch 1, wobei der obere Block (550) an einem unteren Abschnitt davon mit einem Befestigungsteil (553) für ein elastisches Element ausgestattet ist, um durch Befestigung des elastischen Elements (570) zu verhindern, dass das elastische Element (570) abgetrennt wird.

6. Fernsteuerungsanordnung (10) nach Anspruch 3 oder 4, wobei die zweite Befestigungsöffnung (531) in dem oberen Block (550) gebildet ist und das Fernsteuerungsschalter-Kupplungsteil (510) an dem unteren Block (560) bereitgestellt ist.

7. Fernsteuerungsanordnung (10) nach Anspruch 6, wobei der untere Block (560) in den oberen Block (550) aufgenommen ist, das elastische Element (570) zwischen den oberen und den unteren Blöcken angeordnet ist, um die oberen und unteren Blöcke elastisch zu tragen, der obere Block (550) eine Schließbacke (555) beinhaltet, um zu verhindern, dass der obere Block (550) von dem unteren Block (560) getrennt wird, und wobei der untere Block (560) einen Schließvorsprung (565) beinhaltet, um zu verhindern, dass der untere Block (560) von dem oberen Block (550) getrennt wird.

## Revendications

1. Ensemble de télécommande (10) installé dans un module de coussin de sécurité gonflable pour véhicule, l'ensemble comprenant :
un capot (100) destiné à recouvrir toute une zone du module de coussin de sécurité gonflable ;
un commutateur de télécommande (200) installé dans le capot (100) ;
une plaque de fixation (300) destinée à fixer les composants installés dans le module de coussin de sécurité gonflable ; et
un adaptateur à blocs (500) installé entre le commutateur de télécommande (200) et la plaque de fixation (300) pour séparer le commutateur de télécommande (200), **caractérisé en ce que** l'adaptateur à blocs (500) comporte :
un bloc supérieur (550) fixé de manière amovible à la plaque de fixation (300) ;
un bloc inférieur (560) fixé de manière amovible au commutateur de télécommande (200) ; et
un élément élastique (570) interposé entre les blocs supérieur et inférieur.

2. Ensemble de télécommande (10) selon la revendication 1, dans lequel la plaque de fixation (300) comporte un élément de fixation d'adaptateur (330) présentant un premier trou de fixation (331), l'adaptateur à blocs comporte un second trou de fixation (531) en correspondance avec le premier trou de fixation (331) de l'élément de fixation d'adaptateur (330), et l'adaptateur à blocs (500) est fixé de manière amovible à la plaque de fixation (300) par un boulon de fixation (533).

3. Ensemble de télécommande (10) selon la revendication 2, dans lequel l'adaptateur à blocs (500) comporte une partie de couplage de commutateur de télécommande (510) présentant un premier trou de couplage (511), le commutateur de télécommande (200) comporte un second trou de couplage (210) en correspondance avec le premier trou de couplage (511) de la partie de couplage de commutateur de télécommande (510) et le commutateur de télécommande (200) est fixé de manière amovible à l'adaptateur à blocs (500) par un boulon de fixation (211).

4. Ensemble de télécommande (10) selon la revendication 3, dans lequel le capot (100) comporte une partie de montage de commutateur de télécommande (110) dans laquelle est logé le commutateur de télécommande (200).

5. Ensemble de télécommande (10) selon la revendication 1, dans lequel le bloc supérieur (550) est pourvu, au niveau d'une section inférieure de celui-ci, d'une partie de fixation (553) destinée à un élément élastique (570) visant à fixer ce dernier pour l'empêcher de se détacher.

6. Ensemble de télécommande (10) selon la revendication 3 ou 4, dans lequel le second trou de fixation (531) est constitué dans le bloc supérieur (550) et la partie de couplage de commutateur de télécommande (510) est prévue au niveau du bloc inférieur (560).

7. Ensemble de télécommande (10) selon la revendication 6, dans lequel le bloc inférieur (560) est logé dans le bloc supérieur (550), l'élément élastique (570) est interposé entre les blocs supérieur et inférieur pour supporter de manière élastique les blocs supérieur et inférieur, le bloc supérieur (550) comporte une mâchoire de verrouillage (555) visant à empêcher le bloc supérieur (550) de se séparer du bloc inférieur (560), et le bloc inférieur (560) comporte une saillie de verrouillage (565) visant à empêcher le bloc inférieur (560) de se séparer du bloc supérieur (550).
